(19) Europäisches Patentamt
European Patent Office
Office européen des brevets

(11) **EP 3 079 162 B1**

(12) **EUROPEAN PATENT SPECIFICATION**

(45) Date of publication and mention
of the grant of the patent:
**04.09.2019   Bulletin 2019/36**

(51) Int Cl.:
**H01F 38/08** $^{(2006.01)}$          **B23K 11/25** $^{(2006.01)}$

(21) Application number: **16000106.1**

(22) Date of filing: **18.01.2016**

(54) **DEVICE AND METHOD FOR DETECTING THE IRON CORE SATURATION OF A RESISTANCE SPOT WELDING TRANSFORMER UTILISING MEASUREMENT OF THE PRIMARY CURRENT OF THE TRANSFORMER**

VORRICHTUNG UND VERFAHREN ZUR ERKENNUNG DER EISENKERNSÄTTIGUNG EINES WIDERSTANDSPUNKTSCHWEISSTRANSFORMATORS MITTELS MESSUNG DES PRIMÄRSTROMS DES TRANSFORMATORS

DISPOSITIF ET PROCÉDÉ PERMETTANT DE DÉTECTER LA SATURATION D'UN NOYAU DE FER D'UN TRANSFORMATEUR DE SOUDAGE PAR POINTS À RÉSISTANCE UTILISANT LA MESURE DU COURANT PRIMAIRE DU TRANSFORMATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.04.2015   SI 201500091**

(43) Date of publication of application:
**12.10.2016   Bulletin 2016/41**

(73) Proprietor: **Univerza v Mariboru, Fakulteta za elektrotehniko, racunalnistvo in informatiko 2000 Maribor (SI)**

(72) Inventors:
• **SUKIC, Primoz**
  **3230 Sentjur (SI)**
• **PETRUN, Martin**
  **2364 Ribnica na Pohorju (SI)**
• **STUMBERGER, Gorazd**
  **2251 Ptuj (SI)**
• **KLOPCIC, Beno**
  **1231 Crnuce (SI)**
• **DOLINAR, Drago**
  **2000 Maribor (SI)**
• **CERNELIC, Jernej**
  **2316 Loznica (SI)**

(74) Representative: **Marn, Jure Ljubljanska ulica 9 2000 Maribor (SI)**

(56) References cited:
**EP-A2- 1 249 298          DE-A1- 4 134 461
DE-C1- 19 621 526          JP-A- S6 422 477
US-A- 4 973 815**

**Description**

FIELD OF INVENTION

Electrical engineering; DC-DC converters; transformers; iron core saturation detection; resistance spot welding

TECHNICAL PROBLEM

The technical problem solved by this invention is magnetic saturation detection within the iron core of a transformer for resistance spot welding (a welding transformer hereinafter) which is based on the incorporation of additional sensors. Such upgrade of the welding transformer may, amongst other consequences, change the properties of the device, increase its complexity, increase the costs of production and decrease the robustness of the entire welding system.

Experts in this field are aware that saturation of the welding transformer causes large current spikes in the primary current and represents a considerable problem for existing welding systems. The mentioned current spikes are undesirable as they cause increase of power losses throughout the entire welding system as well as disturb its operation and therefore affect its operational reliability. Another consequence of the current spikes is also the shortening of life cycles of the welding systems, as the appearance of the current spikes may damage or in the worst case even destroy the device. The current spikes and their undesired effects can be eliminated with appropriate saturation detection of the welding transformer's iron core. As mentioned, the existing solutions require incorporation of additional sensors along with solving other associated problems.

STATE-OF-THE-ART

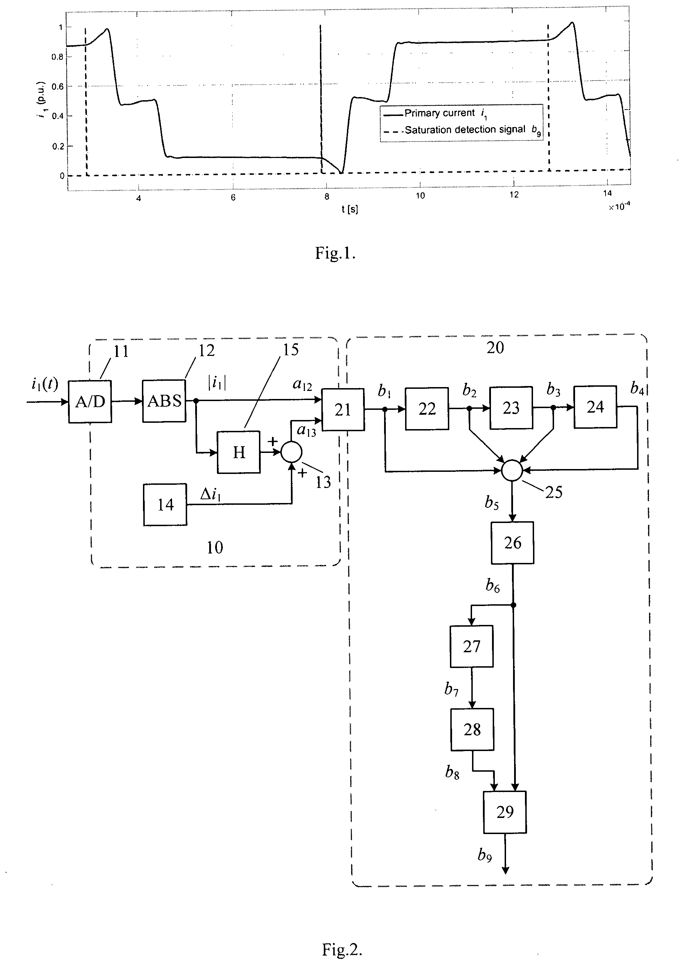

Saturation of the welding transformer's iron core frequently occurs during the operations of middle frequency systems for resistance spot welding. This phenomenon is attributed to various reasons and is observed during different phases of a welding cycle. The saturation of a welding transformer's iron core causes disturbing spikes in the primary current at the end of every current pulse. Saturation of the iron core (and current spikes) can occur regardless of the value of the welding current: at the beginning of the welding cycle (e.g. on the first primary current pulse), when the welding current is still very low as well as later on, when the welding current already comes close to its nominal value (Figure 1). With appropriate identification of the current spikes and corresponding closed-loop feed-back control of an input inverter it is possible to entirely remove the saturation and the disturbing current spikes (Patent EP 2 097 912 B1). The saturation detection can also be performed indirectly with devices for measuring of the leakages magnetic fields (Patent DE 10 2014 209 619.7 A1, 354705 DE) or by calculating the differences between primary and secondary currents of the transformer (U.S. patent No. 5,942,134). In addition, patents DE 41 34 461 A1, DE 196 21 526 C1, need to be mentioned, wherein US patent No. 5,942,134 is a US-family member of DE 196 21 526 C1. Saturation detection realizations described in U.S. patent No. 5,942,134, DE 41 34 461 A1, DE 196 21 526 C1 are based on comparison of measured analogue values of primary and secondary currents. Furthermore, it is mentioned in U.S. patent No. 5,942,134, DE 41 34 461 A1, DE 196 21 526 C1 that saturation detection can work efficiently even only with a measurement of primary current. In contrast, saturation detection methods described in US 4 973 815 and in JP S64 22477 A are based only on an analogue measurement of primary current of a welding transformer.

This theoretically simple method is protected by U. S. Patent No. 5,942,134. However, due to its high sensitivity to disturbances, its practical realisation becomes difficult.

DETAILED DESCRIPTION OF INVENTION

The introduced technical problem is solved in a technically effective and inexpensive way with the device of claim 5 and the method of claim 1 for the welding transformer's iron core saturation detection utilising the measurement of the transformer's primary current. The proposed saturation detection is based on an analysis of the measured primary current of the transformer. By using the proposed solution, additional sensors are not needed at all, as the measurement of the primary current is required in any case due to other reasons (e. g., it is required for welding current control, protection and diagnostics). In this way, additional components within the welding systems, as well as all negative effects and aspects of using additional sensors and auxiliary devices for the saturation detection within welding transformers' iron cores can be avoided.

The saturation of a welding transformer's iron core is a widespread phenomenon. Due to various magnetic and electric imbalances, this phenomenon can occur at different loadings and precludes full utilisation of the transformer's iron core. The saturation occurs in the form of a quick increase of primary current $i_1$ of the welding transformer at the end of each half-period (Fig. 1). This increase of the primary current in the form of disturbing current spikes can occur as follows: (1) only in positive or only in negative half-periods of the primary current following the saturation due to the magnetic or electric imbalances or, (2) during both half-periods due to inappropriate dimensioning of a cross-sectional area of the transformer's iron core. Both possibilities mentioned above can trigger the operation of protection due to a limiting value of primary current $i_1$ being exceeded. The phenomenon of the saturation in any case shows up as an inappropriate time response of the primary current of the transformer. Therefore, one of the possible ways of saturation detection is an appropriate analysis of the measured primary current. Presentation of an algorithm for saturation detection of a welding transformer's iron core, on the basis of measuring the instantaneous value of the primary current or its time derivative, is given in the form of a block scheme in Figs. 2, 3, 4 and 5.

The new solution is based only on measuring the primary current using a suitable measuring device, which measures either its instantaneous value or its slope in the form of a corresponding time derivative of the primary current. The saturation detector consists of two groups of devices, which perform two different functions. The first group represents the input part of the device (groups of elements (10), (30), (40), (50) in Figs. 2, 3, 4, 5) and performs functions of adjusting and evaluating two inputs of the device. The first input represents a signal based on which the saturation can be detected (for example, an instantaneous value of the primary current or output voltage of a Rogowski coil). The second input represents a reference value (for example, a reference value of an amplitude or slope of the current), which is a basic measure for saturation detection. A central element of saturation detection is a comparator (21). Based on comparison of a previously adjusted input values, it evaluates an essential condition for the saturation detection and at the same time represents a link between the first and the second groups of the devices.

In the second part of the device (a group of elements (20), Figs. 2, 3, 4 and 5), a binary logic takes care of removing possible disturbances (elements (22) - (26)), whilst the timer (27) with the negator (28) and with the element (29) take care of avoiding unnecessary saturation detection during converter switching in instances, when it is known that the saturation cannot occur.

The saturation detection in the form of an inappropriate increase of the primary current can be carried out with the implementation of an algorithm for the detection on a processor utilised for control of the system or in an independent implementation using an analogous technique and a binary logic. As an input of the detector, the following can be used:

1) primary current $i_1(t)$ or
2) output voltage of Rogowski coil $u_R(t)$, which represents the slope of primary current, i.e. time derivative of primary current $di_1(t)/dt$.

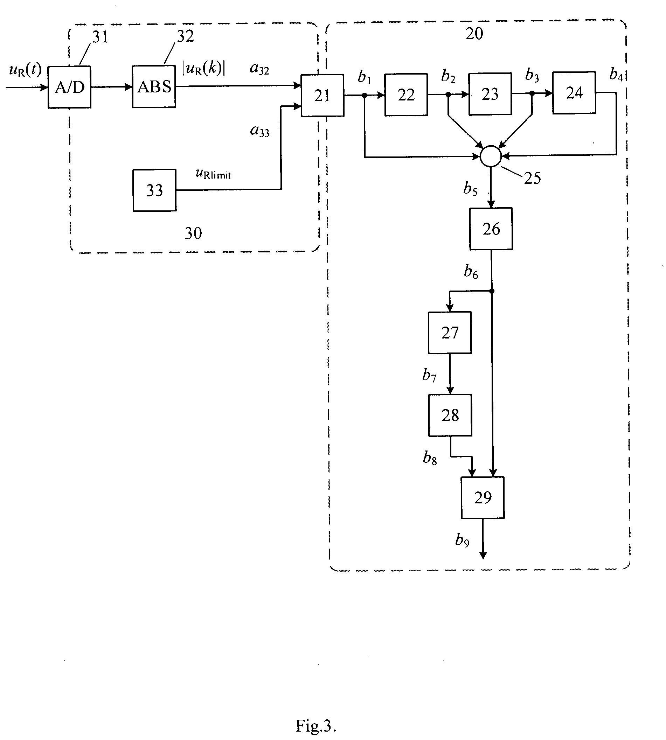

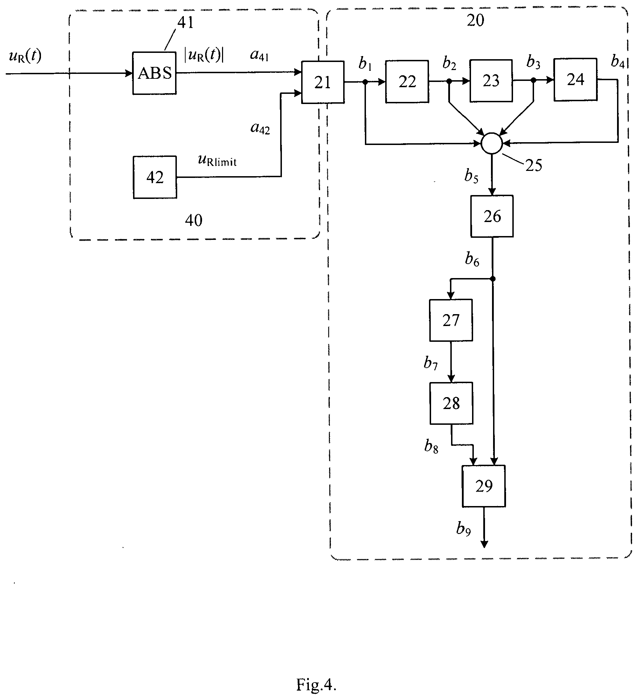

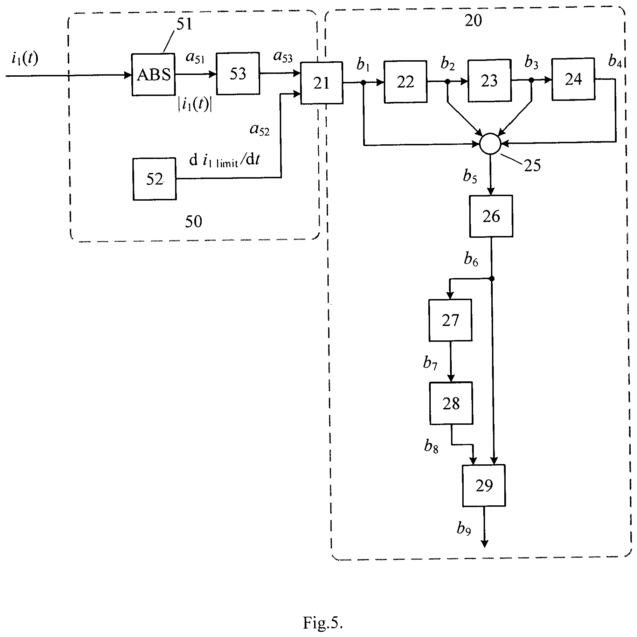

The input part of the saturation detector in case 1), where the input is primary current $i_1(t)$, can be implemented digitally within a discrete time domain (a group of elements (10) in Fig. 2) or analogously within a continuous time domain (a group of elements (50) in Fig. 5). In a similar way, it is possible to implement the input part of the saturation detector in case 2), where the input is output voltage $u_R(t)$ of the Rogowski coil. The implementation can be carried out digitally within a discrete time domain (a group of elements (30) in Fig. 3) or analogously within a continuous time domain (a group of elements (40) in Fig. 4). The implemented output part of the saturation detector, i.e. the binary logic with the timer in the form of a group of elements (20) is the same in all four cases in Figs. 2, 3, 4 and 5. The analogues implementations differ from the digital ones only in the fact that in the digital implementation, the comparator (21) compares two digital values, whereas in the analogue implementation of the input part, the comparator (21) compares two analogue values. In the both cases, the output from the comparator is binary value $b_1$, which takes values 0 or 1, depending on the conditions.

It is also necessary to highlight that in cases 1) (examples in Figs. 2 and 5), the input of the saturation detector is the appropriate output voltage $u_{mi1}(t)$ from the used current measuring device, which is proportional to current $i_1(t)$ ($u_{mi1}(t) \equiv i_1(t)$). The reason for this is the voltage output from the current measuring device of the primary current.

According to the invention itself, method regarding the saturation detection of the transformer core, in particular for the resistance spot welding, comprises the following steps:

- determining the value of the first input into the comparator (21);
- determining the value of the second input into the comparator (21) (reference value), said value selected from the following group: $|i_1(k - 1)| + \Delta i_1$, $u_{Rlimit}$, $di_{1\,limit}(t)/dt$;
- comparison between said values of said first and said second inputs in said comparator (21), wherein the input into at least one input part of the saturation detector (10, 30, 40, 50) is selected from a group containing: instantaneous value of primary current $i_1(t)$, instantaneous value of voltage from the Rogowski coil $u_R(t)$, said instantaneous value of voltage proportional to the time derivative of the primary current $di_1(t)/dt$;
- determining whether the first condition for saturation detection of the core (also called **unconfirmed saturation detection**) has been met, where the value of the first input (measured value) into the comparator (21) should be greater than the value of the second input (reference value).

For the purpose of this application, the expression" unconfirmed saturation detection" is used for labelling only a potential, i.e. unconfirmed possibility of iron core saturation. A necessary condition is that the unconfirmed possibility of the saturation detection becomes the confirmed saturation detection fulfilled if the output from (29) is equal to 1.

The method for detecting the transformer iron core saturation according to the invention, especially for resistance spot welding, also comprises in addition to previously mentioned steps the step for confirming of unconfirmed saturation using time discrete part with the binary logic in the form of elements (20) with at least two delays ((22), (23)) with at least two delaying elements, preferably with three delays ((22), (23), (24)), preferably with at least three delaying elements, more preferably with at least four delaying elements. Said method is presented in in Figs. 2, 3, 4 and 5.

Furthermore, determining of the transformer core saturation in the implemented case may also comprise the following steps:

- determining output value $b_1$ from the comparator (21) based on a comparison between said values of the first and second inputs into the comparator (21), wherein $b_1 = 1$ if the value of said first input in (21) is greater or equal to the value of said second input, and $b_1 = 0$, if the value of said first input is smaller than the value of said second input;
- delaying of output from the comparator (21) comprising value $b_1$ in first delaying element (22) for one sampling interval in order to obtain value $b_2$;
- delaying of output from said first delaying element (22) with value $b_2$ in second delaying element (23) for one sampling interval in order to obtain value $b_3$;
- delaying of output from second delaying element (23) with value $b_3$ in third delaying element (24) for one sampling interval in order to obtain value $b_4$;
- summing up of output values $b_1 + b_2 + b_3 + b_4$ and determining that potential saturation detection of the magnetic core has occurred, when the result exceeds predetermined value, preferably 3.

The method for the saturation detection of the transformer's iron core according to the invention, especially for resistance spot welding, also comprises in addition to already mentioned steps delaying of input $b_6$ in timer (27) for time $T_d$, wherein $T_d = mT_s$, wherein values $m$ and sampling time $T_s$ depend on modulation frequency, control of the welding system and property of the welding system as a whole.

In addition, the invention also contains a device for the saturation detection of the transformer's iron core, in particular for the resistance spot welding, comprising:

- elements for determining and adjusting values of the first input into the comparator (21);
- elements for determining values of the second input into the comparator (21) (representing reference value), selected from the group containing:

$$|i_1(k-1)| + \Delta i_1, u_{\mathrm{Rlimit}}, \mathrm{d}i_{1\,\mathrm{limit}}(t)/\mathrm{d}t;$$

- comparator (21) for determining binary output value $b_1$ on the basis of comparing of said values of said first and said second inputs into the comparator (21), wherein $b_1 = 1$ if the value of said first input in (21) is greater or equal to the value of said second input, and $b_1 = 0$, if the value of said first input is smaller than the value of said second input;
- first delaying element (22) for delaying the output from comparator (21) with value $b_1$ for one sampling interval in order to obtain value $b_2$;
- second delaying element (23) for delaying the output from (22) with value $b_2$ for one sampling interval in order to obtain value $b_3$;
- third delaying element (24) for delaying the output from (23) with value $b_3$ for one sampling interval in order to obtain value $b_4$;
- adder (25) for summing output values $b_1 + b_2 + b_3 + b_4$, said sum equals to $b_5$.
- comparator (26) for determining whether $b_5$ is greater of predetermined value, preferably 3, this representing the second condition for saturation detection (still unconfirmed saturation detection), and setting said output value to $b_6 = 1$;
- timer (27) for delaying input $b_6$ for time $T_d$, wherein $T_d = mT_s$, wherein values $m$ and sampling time $T_s$ depend on modulation frequency, control of the welding system and property of the welding system as a whole;
- negator (28) for negating input value $b_7$;
- output from element (29) setting itself to value 1, if at the same time $b_6 = 1$ and $b_8 = 1$, otherwise setting itself to value is 0; said value $b_9 = 1$ meaning confirmed saturation detection.

The implementation of the saturation detection based on the invention and the schemes in Figs. 2, 3, 4, and 5, where the device contains a suitable processor, which is used for the control.

The implementation of the saturation detection based on the invention and the schemes in Figs. 2, 3, 4, and 5, where the device contains a separate processor, which is not used for the control of the resistance spot welding system.

The device for the independent implementation of the saturation detection based on the invention presented in Figs. 2, 3, 4, and 5, with a suitable binary logic.

Hereafter, the invention is presented with descriptions from figures, which constitute a part of this patent application. Reference labels relating to elements are marked with the numbers of the referenced labels and present, such as:

Fig. 1 presents the time behaviour of the primary current $i_1(t)$ and a signal of the saturation detection.

Fig. 2 presents a block scheme of an algorithm for the saturation detection - the input is primary current $i_1(t)$. In the figure, the following items are displayed: time discrete input part (10), A/D converter (11), element for determining the absolute value of the primary current (12), element (13) for summation of output $\Delta i_1$ from (14) and output $|i_1(k - 1)|$ from (15), element (14) for setting up in advance the selected value of the evaluated amplitude of disturbance (noise) during measurement of current $\Delta i_1$, delaying element (15), time discrete binary logic (20), said comparator (21) for comparing between the outputs from said elements (12) and (13), said first delaying element (22), said second delaying element (23), said third delaying element (24), said adder (25), said comparator (26), said timer (27), said negator (28) for the negation of the output value from said timer (27), said element (29) for the determining of the confirmed saturation detection , binary outputs $b_1$, $b_2$, $b_3$, $b_4$, $b_5$, $b_6$, $b_7$, $b_8$, $b_9$.

Fig. 3 presents a block scheme of an algorithm for the saturation detection - the input is the output voltage of the Rogowski coil $u_R(t)$, which is proportional to the slope of the observed current $i_1(t)$, i.e. time derivative of the primary current $di_1(t)/dt$. In the figure, the following items are presented: time discrete input part (30), A/D converter (31), element for determining the absolute value of the voltage of the Rogowski coil (32), element for setting up predetermined value of the limiting slope of the primary current in the form of corresponding voltage of the Rogowski coil $u_{Rlimit}$ (33) (reference value), said time discrete binary logic (20), said comparator (21) for comparing between the outputs from said elements (32) and (33), said first delaying element (22), said second delaying element (23), said third delaying element (24), said adder (25), said comparator (26), said timer (27), said negator (28) for the negation of the output value from said timer (27), said element (29) for the determining of the confirmed saturation detection , binary outputs $b_1$, $b_2$, $b_3$, $b_4$, $b_5$, $b_6$, $b_7$, $b_8$, $b_9$.

Fig. 4 presents a block scheme of an algorithm for the saturation detection - the input is the output voltage of the Rogowski coil $u_R(t)$, which is proportional to the slope of the observed current $i_1(t)$, i.e. time derivative of the primary current $di_1(t)/dt$. In the figure, the following items are presented: time continuous input part (40), element for determining of the absolute value of the voltage from the Rogowski coil (41), element for setting up predetermined value of the limiting slope of the primary current in the form of the corresponding voltage of the Rogowski coil (42) (reference value), said time discrete binary logic (20), said comparator (21) for comparing between the outputs from said elements (41) and (42), said first delaying element (22), said second delaying element (23), said third delaying element (24), said adder (25), said comparator (26), said timer (27), said negator (28) for the negation of the output value from said timer (27), said element (29) for the determining of the confirmed saturation detection, binary outputs $b_1$, $b_2$, $b_3$, $b_4$, $b_5$, $b_6$, $b_7$, $b_8$, $b_9$.

Fig. 5 presents a block scheme of an algorithm for the saturation detection - the input is primary current $i_1(t)$. In the figure, the following items are presented: time continuous input part (50), element for determining the absolute value of the primary current (51), element for analogous determination of time derivative of the primary current $di_1(t)/dt$ (53), element for determining the limiting value of the slope of the primary current $di_{1\,limit}(t)/dt$ (52), said time discrete binary logic (20), said comparator (21) for comparing between the outputs from said elements (53) and (52), said first delaying element (22), said second delaying element (23), said third delaying element (24), said adder (25), said comparator (26), said timer (27), said negator (28) for the negation of the output value from said timer (27), said element (29) for the determining of the confirmed saturation detection, binary outputs $b_1$, $b_2$, $b_3$, $b_4$, $b_5$, $b_6$, $b_7$, $b_8$, $b_9$.

Hereafter, the solution of the invention is described involving realisation cases.

**1. The first case realised: digital implementation of the saturation detector in a case, where the input is primary current $i_1(t)$ (as presented in Fig. 2)**

The current spikes are a consequence of the magnetic saturation and need to be detected as soon as possible whilst also accounting for the measurement's noise. A method for saturation detection is presented using the block scheme in Fig. 2. The saturation detection is carried out based on an analysis of tracking the time discrete values of primary current $i_1(t)$. An appropriate value of current $i_1(t)$ could be obtained with a current measuring transformer, a LEM measuring instrument or any other current measuring instrument. Using the A/D converter (11), we first obtain a time-discrete value of primary current $i_1(k)$ at the output. In element (12), an absolute value of primary current $i_1(k)$ is determined in such a way as to obtain $a_{12} = |i_1(k)|$ at the output. This value is held with the element (15) (Hold) for one sampling interval, hence we obtain $|i_1(k - 1)|$ at the output. Using the element (14), we set up a marginal value of current $\Delta i_1$ (reference), which is then added to the absolute value of the delayed primary current $|i_1(k - 1)|$ in adder (13) in order to obtain $a_{13} = |i_1(k - 1)| + \Delta i_1$ at the output. Value $\Delta i_1$ is small and is dependent upon the desired properties of the saturation detector, which is selected at calibration of the device. In the comparator (21), a comparison of the outputs from (12) and (13) is carried out. If $a_{12} > a_{13}$, binary value 1 ($b_1 = 1$) appears on the output of the comparator. If $a_{12} < a_{13}$, binary value 0 ($b_1 = 0$) appears on the output of the comparator. In (22), $b_1$ is held for one sampling interval and $b_2$ is obtained, further in (23), $b_2$ is held for one sampling interval and $b_3$ is obtained, whilst in (24), $b_3$ is held for an additional sampling interval and $b_4$ is obtained. In the adder (25), the summation of the outputs from (21), (22), (23) and (24) is carried out, which resulted in $b_5 = b_1 + b_2 + b_3 + b_4$. In (26), condition $b_5 \geq 3$ is determined. If the condition in (26) is met, its output takes value $b_6 = 1$, which means, that the unconfirmed saturation has occurred. If the condition is unfulfilled, the output from (26) takes value $b_6 = 0$, which means, the possibility of saturation was not indicated. The output from the timer (27) sets itself to value $b_7 = 1$ when value $b_6 = 1$ appears on its input. Value $b_7$ holds this value on the output for a certain time $T_d = m \, T_s$. After that time, the output sets value $b_7 = 0$. Values $m$ and sampling time $T_s$ depend on modulation frequency, control of the welding system and the property of the welding system as a whole. In (28), value $b_7$ is negated and value $b_8$ is obtained on the output. The output from (29) is set to value $b_9 = 1$, if $b_6 = 1$ and $b_8 = 1$ hold simultaneously. If this condition does not hold, the output from (29) equals $b_9 = 0$. Value $b_9 = 1$ means that the confirmed saturation detection has occurred whilst value $b_9 = 0$ means that this detection did not occur.

**2. The second case realised: digital implementation of a saturation detector in a case where the input is voltage from the Rogowski coil $u_R(t)$ (as presented in Fig. 3)**

A block scheme of the saturation detector with $u_R(t)$ is presented in Fig 3. Instead of current $i_1(t)$ on the input into the device, it is possible to use output voltage from the Rogowski coil $u_R(t)$, which is proportional to a slope of the observed current $i_1(t)$, i.e. time derivative of the primary current $di_1(t)/dt$. Instead of $i_1(t)$, the input in (31) is the output voltage of the Rogowski coil $u_R(t)$.

At first, by means of the A/D converter (31), a time discrete value of voltage $u_R(k)$ is obtained on its output from an instantaneous value of voltage $u_R(t)$ on its input. In the element (32), an absolute value of voltage $u_R(k)$ is determined, such that on the output, value $a_{32} = |u_R(k)|$ is obtained. In the element (33), the limiting value of voltage $a_{33} = u_{Rlimit}$ (reference) is set. In the comparator (21), value $a_{33}$ is then compared with value $a_{32}$, which represents the output from (32). If value $a_{32} > a_{33}$, the output from (21) sets itself to binary value $b_1 = 1$. If value $a_{32} < a_{33}$, the output from (21) sets itself to binary value $b_1 = 0$. The rest of the saturation detection from the element (22) to the element (29) is equal to the previous case in Fig. 2.

3. **The third case realised: analogous implementation of a saturation detector in the case where the input is voltage from the Rogowski coil $u_R(t)$ (as presented in Fig. 4)**

Analogous implementation of the saturation detector on the basis of input voltage $u_R(t)$ is presented in Fig. 4. It differs from the implementation in Fig. 3 only in not containing the A/D converter (the element (31) in Fig. 3 (or the element (11) in Fig. 2)). Voltage of the Rogowski coil $u_R(t)$ on the output from the element (41) takes analogous value $a_{41} = |u_R(t)|$. In the element (42), the limiting value of analogous voltage $a_{42} = u_{Rlimit}$ (reference) is set up. In the comparator (21), voltage $a_{42}$ is then compared with value $a_{41}$, which represents the output from (41). In this case, the element (21) is the analogous comparator. If analogue value $a_{41} > a_{42}$, the output from (21) sets itself to binary value $b_1 = 1$. If $a_{41} < a_{42}$, the output from (21) sets itself to binary value $b_1 = 0$. The rest of the saturation detection from the element (22) to the element (29) is equal to the previous cases in Figs. 2 and 3.

**4. The fourth case realised: the analogous implementation of a saturation detector when the input is primary current $i_1(t)$ (as presented in Fig. 5)**

Analogous implementation of the saturation detector on the basis of measuring current $i_1(t)$ (as presented in Fig. 5) differs from the digital implementation presented in Fig. 2 only in the structure of the input part in the form of a group (50). In this case, the input part (50) does not have the A/D converter. At first, the absolute value of the input current is determined in the element (51), such that output from (51) is $a_{51} = |i_1(t)|$. From input $a_{51}$ in the element (53), a slope of the primary current, i.e. its time derivative $a_{53} = di_1(t)/dt$ is determined with analogous derivation. In the element (52), the limiting value of slope of the primary current $a_{52} = \mathrm{d}i_{1\,\mathrm{limit}}(t)/\mathrm{d}t$ is set up. The value $a_{52}$ is later on compared with value $a_{53}$ (represents the output from (53)) in the comparator (21). In this case, the element (21) is the analogous comparator. If the analogue value is $a_{53} > a_{52}$, the output from (21) sets itself to binary value $b_1 = 1$. If the value is $a_{51} < a_{52}$, the output from (21) sets itself to binary value $b_1 = 0$. The rest of the saturation detection from the element (22) to the element (29) is equal to the previous cases in Figs. 2, 3 and 4.

**Claims**

1. Method for saturation detection of a transformer's iron core, in particular for a resistance spot welding transformer, by means of a binary logic (20), comprising the following steps:

   - determining a value of a first input into a first comparing means, said first input value representing a signal based on measuring the primary current of said transformer using a suitable measuring device configured to measure the instantaneous value of said primary current, or the slope of the primary current in the form of a corresponding time derivative of the primary current represented by an output voltage of a Rogowski coil;
   - determining a value of a second input into said first comparing means, said second input value representing a reference value of an amplitude or a slope of the current;
   - determining a binary output value $b_1$ of said first comparing means (21) on the basis of comparing of said values of said first and said second inputs into said comparing means, wherein $b_1 = 1$ if the value of said first input in said first comparing means is greater or equal to the value of said second input in said first comparing means, this representing a first condition for saturation detection, and $b_1 = 0$, if the value of said first input is smaller than the value of said second input;
   - a first delaying step of delaying the output from said first comparing means with value $b_1$ for one sampling interval in order to obtain a value $b_2$ by using a first delaying means;
   - a second delaying step of delaying the output from said first delaying means with value $b_2$ for one sampling interval in order to obtain a value $b_3$ by using a second delaying means;
   - summing output values $b_1$, $b_2$, $b_3$, said sum equal to a value $b_5$, said summing performed by using an adding means, to obtain said value $b_5$ ;
   - determining whether $b_5$ is greater than a predetermined value, which is preferably 3, this representing a second condition for saturation detection, by using a second comparing means and setting an output value of said second comparing means to $b_6 = 1$ if this condition is met ;
   - providing said output value $b_6$ of said second comparing means as an input to a timer (27) configured for holding input $b_6$ for time $T_d$, wherein $T_d = mT_s$, wherein value m and sampling time $T_s$ depend on a modulation frequency of the primary current, to obtain an output of said timer (27) as a value $b_7$;
   - negating said value $b_7$ by providing it as input value $b_7$ into a negating means to obtain at the output of said negating means a value $b_8$;
   - setting an output from said binary logic (20) to value 1, if at the same time $b_6 = 1$ and $b_8 = 1$, otherwise setting said output from binary logic (20) to value 0 to obtain output value $b_9$; said output value of said binary logic being $b_9 = 1$ meaning confirmed saturation detection.

2. Method for saturation detection of the transformer's iron core according to the previous claim, further comprising in said step for confirming the unconfirmed saturation using the binary logic (20) comprising said at least first and second delaying steps (22, 23) with said at least two first and second delaying means, in addition a third delaying step of delaying the output from said second delaying means with value $b_3$ for one sampling interval in order to obtain value $b_4$ by using a third delaying means (24), and preferably a fourth delaying step of delaying the output from said third delaying means (24) with value $b_4$ for one sampling interval in order to obtain a fourth delayed value by using a fourth delaying means, and summing the output values of the first comparator (21) and the first to third delaying means, and optionally the fourth delaying means, to obtain the value $b_5$.

3. Method for saturation detection of the transformer's iron core according to any of the previous claims wherein said first input value is selected from the group containing: instantaneous value of primary current, time discrete value of primary current, instantaneous value of output voltage of a Rogowski coil, time discrete value of output voltage of a Rogowski coil.

4. Method for saturation detection of the transformer's iron core according to any of the previous claims wherein said second input value is selected from the group containing:

$$|i_1(k-1)| + \Delta i_1, \; u_{Rlimit}, \qquad di_{1limit}(t)/dt,$$

wherein $|i_1(k-1)|$ is an absolute value of said primary current held for one sampling interval and $\Delta i_1$ is an added marginal value of current selected according to desired properties of the saturation detection; $u_{Rlimit}$ is a limiting value of an analogous voltage from said Rogowski coil; $di_{1limit}(t)/dt$ is a limiting value of the slope of the primary current.

5. A device for saturation detection of the transformer's iron core, in particular for resistance spot welding transformer, comprising:

- elements for determining and adjusting values of a first input into a first comparator (21); said first input value into said first comparator (21) representing a signal based on measuring the primary current of said transformer using a suitable measuring device configured to measure the instantaneous value of said primary current, or the slope of the primary current in the form of a corresponding time derivative of the primary current represented by an output of a Rogowski coil;
- elements for determining values of the second input into the comparator (21), said second input value representing a reference value of an amplitude or a slope of the current;
- said first comparator (21) for determining binary output value $b_1$ on the basis of comparing of said values of said first and said second inputs into said first comparator (21), wherein $b_1 = 1$ if the value of said first input in said first comparator (21) is greater or equal to the value of said second input, and $b_1 = 0$, if the value of said first input is smaller than the value of said second input;
- a first delaying element (22) for delaying the output from said first comparator (21) with value $b_1$ for one sampling interval in order to obtain value $b_2$;
- a second delaying element (23) for delaying the output from said first delaying element (22) with value $b_2$ for one sampling interval in order to obtain value $b_3$;
- optionally, a third delaying element (24) for delaying the output from said second delaying element (23) with value $b_3$ for one sampling interval in order to obtain value $b_4$;
- an adder (25) for summing output values $b_1 + b_2 + b_3$, and optionally $+ b_4$, said sum equals to $b_5$.
- a second comparator (26) for determining whether $b_5$ is greater than a predetermined value, which is preferably 3, this representing a second condition for saturation detection, still unconfirmed saturation detection, and setting said output value to $b_6 = 1$ if this condition is met;
- a timer (27) for receiving value $b_6$ as input and holding input $b_6$ for time $T_d$, wherein $T_d = mT_s$, wherein value $m$ and sampling time $T_s$ depend on a modulation frequency of the primary current, to obtain an output of said timer (27) as a value $b_7$;
- negator (28) for receiving value $b_7$ as input and for negating input value $b_7$ to obtain a value $b_8$ at the output of said negator;
- an output element (29) setting itself to a value $b_9 = 1$, if at the same time $b_6 = 1$ and $b_8 = 1$, otherwise setting itself to value $b_9 = 0$; said value $b_9 = 1$ meaning confirmed saturation detection.

6. The device according to Claim 5 wherein said first input value is selected from the group containing: instantaneous value of primary current, time discrete value of primary current, instantaneous value of output voltage of said Rogowski coil, time discrete value of output voltage of said Rogowski coil.

7. The device according to Claim 5 wherein said second input value is selected from the group containing: $|i_1(k-1)| + \Delta i_1$, $u_{Rlimit}$, $di_{1limit}(t)/dt$, wherein $|i_1(k-1)|$ is an absolute value of said primary current held for one sampling interval and $\Delta i_1$ is an added marginal value of current selected according to desired properties of the saturation detection; $u_{Rlimit}$ is a limiting value of an analogous voltage from said Rogowski coil; $di_{1limit}(t)/dt$ is a limiting value of the slope of the primary current.

8. The device according to Claims 5 to 7 comprising a discrete input part (10) comprising an A/D converter (11), an element ABS (12) for determining the absolute value of the primary current, an element (14) for providing a preset reference value of current $\Delta i_1$, a Hold element (15) for delaying the absolute value of the primary current by one sampling interval and providing said held absolute value of the current $|i_1(k-1)|$ at its output, another adder (13) for summation of said preset reference current $\Delta i_1$ and output $|i_1(k-1)|$ from Hold element (15), said first comparator (21) comparing between the outputs from said ABS element (12) and said another adder (13).

9. The device according to Claims 5 to 7 comprising a time discrete input part (30) comprising an A/D converter (31), an ABS element (32) for determining the absolute value of the voltage of the Rogowski coil, an element (33) for providing a preset reference value of the limiting slope of the primary current in the form of corresponding voltage of the Rogowski coil $u_{Rlimit}$, said first comparator (21) comparing between the outputs from said ABS elements (32) and element (33) for providing said preset reference value of the limiting slope of the primary current.

10. The device according to Claims 5 to 7 comprising a time continuous input part (40) comprising an ABS element (41) for determining of the absolute value of the voltage from the Rogowski coil, an element (42) for providing a preset reference value of the limiting slope of the primary current in the form of the corresponding voltage of the Rogowski coil, said first comparator (21) comparing between the outputs from said ABS elements (41) and element (42) for providing said preset reference value of the limiting slope of the primary current.

11. The device according to Claims 5 to 7 comprising a time continuous input part (50) comprising an ABS element (51) for determining the absolute value of the primary current, an element (53) for analogous determination and outputting of time derivative of the primary current $di_1(t)/dt$, an element (52) for providing a preset reference value of the slope of the primary current $di_{1\ limit}(t)/dt$, said first comparator (21) comparing between said time derivative of the primary current and said preset reference value of the slope of the primary current.

12. The device according to any of Claims 5 to 11, wherein said device comprises a processor configured to be used for control of the resistance spot welding system.

13. The device according to any of Claims 5 to 11, where said device comprises an autonomous processor, which is separately provided from a processor configured to be used for control of the system for the resistance spot welding.

**Patentansprüche**

1. Verfahren zur Sättigungserfassung des Eisenkerns eines Transformators, insbesondere für einen Widerstandspunktschweißtransformator, mittels einer binären Logik (20), die folgenden Schritte umfassend:

   - Bestimmen eines Wertes einer ersten Eingabe in ein erstes Vergleichsmittel, wobei der erste Eingabewert ein Signal auf Grundlage des Messens des Primärstroms des Transformators unter Verwendung einer geeigneten Messvorrichtung, die konfiguriert ist, um den aktuellen Wert des Primärstroms zu messen, oder der Neigung des Primärstroms in der Form einer entsprechenden Zeitableitung des Primärstroms dargestellt durch eine Ausgabespannung einer Rogowski-Spule darstellt;
   - Bestimmen eines Wertes einer zweiten Eingabe in das erste Vergleichsmittel, wobei der zweite Eingabewert einen Referenzwert einer Amplitude oder einer Neigung des Stroms darstellt;
   - Bestimmen eines binären Ausgabewertes $b_1$ des ersten Vergleichsmittels (21) auf Grundlage des Vergleichens der Werte der ersten und der zweiten Eingabe in das Vergleichsmittel, wobei $b_1 = 1$, wenn der Wert der ersten Eingabe in dem ersten Vergleichsmittel größer als der oder gleich dem Wert der zweiten Eingabe in dem ersten Vergleichsmittel ist, wobei dies eine erste Bedingung für die Sättigungserfassung darstellt, und $b_1 = 0$, wenn der Wert der ersten Eingabe kleiner als der Wert der zweiten Eingabe ist;
   - einen ersten Verzögerungsschritt des Verzögerns der Ausgabe aus dem ersten Vergleichsmittel mit Wert $b_1$ für ein Probenahmeintervall, um einen Wert $b_2$ zu erhalten, indem ein erstes Verzögerungsmittel verwendet wird;
   - einen zweiten Verzögerungsschritt des Verzögerns der Ausgabe aus dem ersten Verzögerungsmittel mit Wert $b_2$ für ein Probenahmeintervall, um einen Wert $b_3$ zu erhalten, indem ein zweites Verzögerungsmittel verwendet wird;
   - Summieren der Ausgabewerte $b_1$, $b_2$, $b_3$, wobei die Summe gleich einem Wert $b_5$ ist, wobei das Summieren durchgeführt wird, indem ein Addiermittel verwendet wird, um den Wert $b_5$ zu erhalten;
   - Bestimmen, ob $b_5$ größer als ein vorbestimmter Wert ist, der bevorzugt 3 ist, wobei dies eine zweite Bedingung für die Sättigungserfassung darstellt, indem ein zweites Vergleichsmittel verwendet und ein Ausgabewert des zweiten Vergleichsmittels auf $b_6 = 1$ festgelegt wird, wenn diese Bedingung erfüllt wird;
   - Bereitstellen des Ausgabewertes $b_6$ des zweiten Vergleichsmittels als eine Eingabe in einen Timer (27), der konfiguriert ist, um Eingabe $b_6$ für die Zeit $T_d$ zu halten, wobei $T_d = mT_s$, wobei der Wert m und die Probenahmezeit $T_s$ von einer Modulationsfrequenz des Primärstroms abhängen, um eine Ausgabe des Timers (27) als Wert $b_7$ zu erhalten;
   - Negieren des Wertes $b_7$, indem er als Eingabewert $b_7$ in ein Negiermittel bereitgestellt wird, um bei der Ausgabe des Negiermittels einen Wert $b_8$ zu erhalten;
   - Festlegen einer Ausgabe aus der binären Logik (20) auf Wert 1, wenn gleichzeitig $b_6 = 1$ und $b_8 = 1$, andernfalls

Festlegen der Ausgabe aus der binären Logik (20) auf Wert 0, um Ausgabewert $b_9$ zu erhalten; wobei der Ausgabewert der binären Logik $b_9$ = 1 bestätigte Sättigungserfassung bedeutet.

2. Verfahren zur Sättigungserfassung des Eisenkerns eines Transformators nach dem vorhergehenden Anspruch, ferner umfassend in dem Schritt zum Bestätigen der nicht bestätigten Sättigung unter Verwendung der binären Logik (20), umfassend den zumindest ersten und zweiten Verzögerungsschritt (22, 23) mit den zumindest zwei ersten und zweiten Verzögerungsmitteln, zusätzlich einen dritten Verzögerungsschritt des Verzögerns der Ausgabe aus dem zweiten Verzögerungsmittel mit Wert $b_3$ für ein Probenahmeintervall, um Wert $b_4$ zu erhalten, indem ein drittes Verzögerungsmittel (24) verwendet wird, und bevorzugt einen vierten Verzögerungsschritt des Verzögerns der Ausgabe aus dem dritten Verzögerungsmittel (24) mit Wert $b_4$ für ein Probenahmeintervall, um einen vierten verzögerten Wert zu erhalten, indem ein viertes Verzögerungsmittel verwendet wird, und Summieren der Ausgabewerte des ersten Komparators (21) und des ersten bis dritten Verzögerungsmittels und optional des vierten Verzögerungsmittels, um den Wert $b_5$ zu erhalten.

3. Verfahren zur Sättigungserfassung des Eisenkerns eines Transformators nach einem der vorhergehenden Ansprüche, wobei der erste Eingabewert aus der Gruppe ausgewählt ist, die Folgendes enthält: aktuellen Wert des Primärstroms, zeitdiskreten Wert des Primärstroms, aktuellen Wert der Ausgabespannung einer Rogowski-Spule, zeitdiskreten Wert der Ausgabespannung einer Rogowski-Spule.

4. Verfahren zur Sättigungserfassung des Eisenkerns eines Transformators nach einem der vorhergehenden Ansprüche, wobei der zweite Eingabewert aus der Gruppe ausgewählt ist, die Folgendes enthält: $|i_1(k-1)| + \Delta i_1$, $u_{Rlimit}$, $di_{1limit}(t)/dt$, wobei $|i_1(k-1)|$ ein Absolutwert des Primärstroms ist, der für ein Probenahmeintervall gehalten wird, und $\Delta i_1$ ein hinzugefügter Grenzwert von Strom ist, der gemäß gewünschten Eigenschaften der Sättigungserfassung ausgewählt ist; $u_{Rlimit}$ ein Begrenzungswert einer analogen Spannung von der Rogowski-Spule ist; $di_{1limit}(t)/dt$ ein Begrenzungswert der Neigung des Primärstroms ist.

5. Vorrichtung zur Sättigungserfassung des Eisenkerns eines Transformators, insbesondere für einen Widerstandspunktschweißtransformator, umfassend:

- Elemente zum Bestimmen und Anpassen von Werten einer ersten Eingabe in einen ersten Komparator (21); wobei der erste Eingabewert in den ersten Komparator (21) ein Signal auf Grundlage des Messens des Primärstroms des Transformators unter Verwendung einer geeigneten Messvorrichtung, die konfiguriert ist, um den aktuellen Wert des Primärstroms zu messen, oder der Neigung des Primärstroms in der Form einer entsprechenden Zeitableitung des Primärstroms dargestellt durch eine Ausgabe einer Rogowski-Spule darstellt;

- Elemente zum Bestimmen von Werten der zweiten Eingabe in den Komparator (21), wobei der zweite Eingabewert einen Referenzwert einer Amplitude oder einer Neigung des Stroms darstellt;

- den ersten Komparator (21) zum Bestimmen des binären Ausgabewertes $b_1$ auf Grundlage des Vergleichens der Werte der ersten und der zweiten Eingabe in den ersten Komparator (21), wobei $b_1$ = 1, wenn der Wert der ersten Eingabe in dem ersten Komparator (21) größer als der oder gleich dem Wert der zweiten Eingabe ist, und $b_1$ = 0, wenn der Wert der ersten Eingabe kleiner als der Wert der zweiten Eingabe ist;

- ein erstes Verzögerungselement (22) zum Verzögern der Ausgabe aus dem ersten Komparator (21) mit Wert $b_1$ für ein Probenahmeintervall, um Wert $b_2$ zu erhalten;

- ein zweites Verzögerungselement (23) zum Verzögern der Ausgabe aus dem ersten Verzögerungselement (22) mit Wert $b_2$ für ein Probenahmeintervall, um Wert $b_3$ zu erhalten;

- optional ein drittes Verzögerungselement (24) zum Verzögern der Ausgabe aus dem zweiten Verzögerungselement (23) mit Wert $b_3$ für ein Probenahmeintervall, um Wert $b_4$ zu erhalten;

- einen Addierer (25) zum Summieren der Ausgabewerte $b_1 + b_2 + b_3$, und optional + $b_4$, wobei die Summe $b_5$ entspricht;

- einen zweiten Komparator (26) zum Bestimmen, ob $b_5$ größer als ein vorbestimmter Wert ist, der bevorzugt 3 ist, wobei dies eine zweite Bedingung für die Sättigungserfassung, noch nicht bestätigte Sättigungserfassung darstellt, und Festlegen des Ausgabewertes auf $b_6$ = 1, wenn diese Bedingung erfüllt ist;

- einen Timer (27) zum Empfangen von Wert $b_6$ als Eingabe und Halten der Eingabe $b_6$ für die Zeit $T_d$, wobei $T_d = mT_s$, wobei der Wert $m$ und die Probenahmezeit $T_s$ von einer Modulationsfrequenz des Primärstroms abhängen, um eine Ausgabe des Timers (27) als Wert $b_7$ zu erhalten;

- einen Negator (28) zum Empfangen von Wert $b_7$ als Eingabe und zum Negieren des Eingabewertes $b_7$, um einen Wert bg an der Ausgabe des Negators zu erhalten;

- ein Ausgabeelement (29), das sich selbst auf einen Wert $b_9$ = 1 festlegt, wenn gleichzeitig $b_6$ = 1 und $b_8$ = 1, sich ansonsten auf Wert $b_9$ = 0 festlegt; wobei der Wert $b_9$ = 1 bestätigte Sättigungserfassung bedeutet.

6. Vorrichtung nach Anspruch 5, wobei der erste Eingabewert aus der Gruppe ausgewählt ist, die Folgendes enthält: aktuellen Wert des Primärstroms, zeitdiskreten Wert des Primärstroms, aktuellen Wert der Ausgabespannung der Rogowski-Spule, zeitdiskreten Wert der Ausgabespannung der Rogowski-Spule.

7. Vorrichtung nach Anspruch 5, wobei der zweite Eingabewert aus der Gruppe ausgewählt ist, die Folgendes enthält: $|i_1(k-1)| + \Delta i_1$, $u_{Rlimit}$, $di_{1limit}(t)/dt$, wobei $|i_1(k-1)|$ ein Absolutwert des Primärstroms ist, der für ein Probenahmeintervall gehalten wird, und $\Delta i_1$ ein hinzugefügter Grenzwert von Strom ist, der gemäß gewünschten Eigenschaften der Sättigungserfassung ausgewählt ist; $u_{Rlimit}$ ein Begrenzungswert eines analogen Spannung von der Rogowski-Spule ist; $di_{1limit}(t)/dt$ ein Begrenzungswert der Neigung des Primärstroms ist.

8. Vorrichtung nach Anspruch 5 bis 7, umfassend einen diskreten Eingabeteil (10), umfassend einen A/D-Wandler (11), ein ABS Element (12) zum Bestimmen des Absolutwertes des Primärstroms, ein Element (14) zum Bereitstellen eines voreingestellten Referenzwertes des Stroms $\Delta i_1$, ein Halteelement (15) zum Verzögern des Absolutwertes des Primärstroms um ein Probenahmeintervall und Bereitstellen des gehaltenen Absolutwertes des Stroms $|i_1(k-1)|$ an seiner Ausgabe, einen weiteren Addierer (13) zur Summierung des voreingestellten Referenzstroms $\Delta i_1$ und der Ausgabe $|i_1(k-1)|$ aus dem Halteelement (15), wobei der erste Komparator (21) zwischen den Ausgaben aus dem ABS-Element (12) und dem weiteren Addierer (13) vergleicht.

9. Vorrichtung nach Anspruch 5 bis 7, umfassend einen zeitdiskreten Eingabeteil (30), umfassend einen A/D-Wandler (31), ein ABS-Element (32) zum Bestimmen des Absolutwertes der Spannung der Rogowski-Spule, ein Element (33) zum Bereitstellen eines voreingestellten Referenzwertes der Begrenzungsneigung des Primärstroms in der Form entsprechender Spannung der Rogowski-Spule $u_{Rlimit}$, wobei der erste Komparator (21) zwischen den Ausgaben aus den ABS-Elementen (32) und dem Element (33) zum Bereitstellen des voreingestellten Referenzwertes der Begrenzungsneigung des Primärstroms vergleicht.

10. Vorrichtung nach Anspruch 5 bis 7, umfassend einen zeitkontinuierlichen Eingabeteil (40), umfassend ein ABS-Element (41) zum Bestimmen des Absolutwertes der Spannung von der Rogowski-Spule, ein Element (42) zum Bereitstellen eines voreingestellten Referenzwertes der Begrenzungsneigung des Primärstroms in der Form der entsprechenden Spannung der Rogowski-Spule, wobei der erste Komparator (21) zwischen den Ausgaben aus den ABS-Elementen (41) und dem Element (42) zum Bereitstellen des voreingestellten Referenzwertes der Begrenzungsneigung des Primärstroms vergleicht.

11. Vorrichtung nach Anspruch 5 bis 7, umfassend einen zeitkontinuierlichen Eingabeteil (50), umfassend ein ABS-Element (51) zum Bestimmen des Absolutwertes des Primärstroms, ein Element (53) zur analogen Bestimmung und zum Ausgeben der Zeitableitung des Primärstroms $di_1(t)/dt$, ein Element (52) zum Bereitstellen eines voreingestellten Referenzwertes der Neigung des Primärstroms $di_{1\,limit}(t)/dt$, wobei der erste Komparator (21) zwischen der Zeitableitung des Primärstroms und dem voreingestellten Referenzwert der Neigung des Primärstroms vergleicht.

12. Vorrichtung nach einem der Ansprüche 5 bis 11, wobei die Vorrichtung einen Prozessor umfasst, der konfiguriert ist, um zur Steuerung des Widerstandspunktschweißsystems verwendet zu werden.

13. Vorrichtung nach einem der Ansprüche 5 bis 11, wobei die Vorrichtung einen autonomen Prozessor umfasst, der separat von einem Prozessor bereitgestellt ist, der konfiguriert ist, um zur Steuerung des Systems für das Widerstandspunktschweißen verwendet zu werden.

## Revendications

1. Procédé de détection de saturation d'un noyau de fer de transformateur, en particulier pour un transformateur de soudage par points à résistance, au moyen d'une logique binaire (20), comprenant les étapes suivantes :

   - la détermination d'une valeur d'une première entrée dans un premier moyen de comparaison, ladite première valeur d'entrée représentant un signal basé sur la mesure du courant primaire dudit transformateur à l'aide d'un dispositif de mesure approprié configuré pour mesurer la valeur instantanée dudit courant primaire, ou la pente du courant primaire sous la forme d'une dérivée temporelle correspondante du courant primaire représenté par une tension de sortie d'une bobine de Rogowski ;
   - la détermination d'une valeur d'une seconde entrée dans ledit premier moyen de comparaison, ladite seconde valeur d'entrée représentant une valeur de référence d'une amplitude ou d'une pente du courant ;

- la détermination d'une valeur de sortie binaire $b_1$ dudit premier moyen de comparaison (21) sur la base de la comparaison desdites valeurs auxdites première et seconde entrées dans ledit moyen de comparaison, où $b_1$ = 1 si la valeur de ladite première entrée dans ledit premier moyen de comparaison est supérieure ou égale à la valeur de ladite seconde entrée dans ledit premier moyen de comparaison, ceci représentant une première condition pour une détection de saturation, et $b_1$ = 0 si la valeur de ladite première entrée est inférieure à la valeur de ladite seconde entrée ;

- une première étape de retardement pour retarder la sortie dudit premier moyen de comparaison avec la valeur $b_1$ pendant un intervalle d'échantillonnage afin d'obtenir une valeur $b_2$ à l'aide d'un premier moyen de retardement ;

- une deuxième étape de retardement pour retarder la sortie dudit premier moyen de retardement avec la valeur $b_2$ pendant un intervalle d'échantillonnage afin d'obtenir une valeur $b_3$ à l'aide d'un deuxième moyen de retardement ;

- la sommation des valeurs de sortie $b_1$, $b_2$, $b_3$, ladite somme étant égale à une valeur $b_5$, ladite sommation étant exécutée à l'aide d'un moyen d'addition, pour obtenir ladite valeur $b_5$ ;

- la détermination pour savoir si $b_5$ est supérieure à une valeur prédéfinie, qui vaut de préférence 3, ceci représentant une seconde condition pour une détection de saturation, à l'aide d'un second moyen de comparaison et le réglage d'une valeur de sortie dudit second moyen de comparaison sur $b_6$ = 1 si cette condition est satisfaite ;

- la fourniture de ladite valeur de sortie $b_6$ dudit second moyen de comparaison en tant qu'entrée vers un temporisateur (27) configuré pour retenir l'entrée $b_6$ pendant le temps $T_d$, où $T_d = mT_s$, ladite valeur m et ledit temps d'échantillonnage $T_s$ dépendant d'une fréquence de modulation du courant primaire, pour obtenir une sortie dudit temporisateur (27) en tant que valeur $b_7$ ;

- l'inversion de ladite valeur $b_7$ en la fournissant en tant que valeur d'entrée $b_7$ dans un moyen d'inversion pour obtenir à la sortie dudit moyen d'inversion une valeur $b_8$ ;

- le réglage d'une sortie de ladite logique binaire (20) sur la valeur 1, si dans le même temps $b_6$ = 1 et bg = 1, sinon le réglage de ladite sortie de la logique binaire (20) sur la valeur 0 pour obtenir une valeur de sortie $b_9$ ; ladite valeur de sortie de ladite logique binaire étant $b_9$ = 1 signifiant détection de saturation confirmée.

2. Procédé de détection de saturation du noyau de fer de transformateur selon la revendication précédente, comprenant en outre dans ladite étape de confirmation de la saturation non confirmée à l'aide de la logique binaire (20) comprenant lesdites au moins première et deuxième étapes de retardement (22, 23) avec lesdits au moins deux premier et second moyens de retardement en plus d'une troisième étape de retardement pour retarder la sortie dudit deuxième moyen de retardement avec la valeur $b_3$ pendant un intervalle d'échantillonnage afin d'obtenir une valeur $b_4$ à l'aide d'un troisième moyen de retardement (24), et de préférence une quatrième étape de retardement pour retarder la sortie dudit troisième moyen de retardement (24) avec la valeur $b_4$ pendant un intervalle d'échantillonnage afin d'obtenir une quatrième valeur retardée à l'aide d'un quatrième moyen de retardement, et la sommation des valeurs de sortie du premier comparateur (21) et des premier au troisième moyens de retardement, et éventuellement du quatrième moyen de retardement, pour obtenir la valeur $b_5$.

3. Procédé de détection de saturation du noyau de fer de transformateur selon l'une quelconque des revendications précédentes, ladite première valeur d'entrée étant choisie dans le groupe contenant : une valeur instantanée de courant primaire, une valeur discrète dans le temps de courant primaire, une valeur instantanée de tension de sortie d'une bobine de Rogowski, une valeur discrète dans le temps de tension de sortie d'une bobine de Rogowski.

4. Procédé de détection de saturation du noyau de fer de transformateur selon l'une quelconque des revendications précédentes, ladite seconde valeur d'entrée étant choisie dans le groupe contenant : $|i_1(k - 1)| + \Delta i_1$, $u_{Rlimit}$, $di_{1limit}(t)/dt$, où $|i_1(k-1)|$ représente une valeur absolue dudit courant primaire maintenu pendant un intervalle d'échantillonnage et $\Delta i_1$ représente une valeur marginale ajoutée de courant choisie en fonction des propriétés souhaitées de la détection de saturation ; $u_{Rlimit}$ représente une valeur limitante d'une tension analogue provenant de ladite bobine de Rogowski ; $di_{1limit}(t)/dt$ représente une valeur limitante de la pente du courant primaire.

5. Dispositif pour la détection de saturation du noyau de fer de transformateur, en particulier pour un transformateur de soudage par points à résistance, comprenant :

- des éléments pour déterminer et ajuster des valeurs d'une première entrée dans un premier comparateur (21) ;

ladite première valeur d'entrée dans ledit premier comparateur (21) représentant un signal basé sur la mesure du courant primaire dudit transformateur à l'aide d'un dispositif de mesure approprié configuré pour mesurer la valeur instantanée dudit courant primaire, ou la pente du courant primaire sous la forme d'une dérivée temporelle correspondante du courant primaire représenté par une sortie d'une bobine de Rogowski ;

- des éléments pour déterminer des valeurs de la seconde entrée dans le comparateur (21), ladite seconde valeur d'entrée représentant une valeur de référence d'une amplitude ou d'une pente du courant ;
- ledit premier comparateur (21) pour déterminer la valeur de sortie binaire $b_1$ sur la base de la comparaison desdites valeurs desdites première et seconde entrées dans ledit premier comparateur (21), où $b_1 = 1$ si la valeur de ladite première entrée dans ledit premier comparateur (21) est supérieure ou égale à la valeur de ladite seconde entrée, et $b_1 = 0$ si la valeur de ladite première entrée est inférieure à la valeur de ladite seconde entrée ;
- un premier élément de retardement (22) pour retarder la sortie dudit premier comparateur (21) avec la valeur $b_1$ pendant un intervalle d'échantillonnage afin d'obtenir la valeur $b_2$ ;
- un deuxième élément de retardement (23) pour retarder la sortie dudit premier élément de retardement (22) avec la valeur $b_2$ pendant un intervalle d'échantillonnage afin d'obtenir la valeur $b_3$ ;
- éventuellement, un troisième élément de retardement (24) pour retarder la sortie dudit deuxième élément de retardement (23) avec la valeur $b_3$ pendant un intervalle d'échantillonnage afin d'obtenir la valeur $b_4$ ;
- un additionneur (25) pour additionner les valeurs de sortie $b_1 + b_2 + b_3$, et éventuellement $+ b_4$, ladite somme étant égale à $b_5$ ;
- un second comparateur (26) pour déterminer si $b_5$ est supérieure à une valeur prédéterminée, qui vaut de préférence 3, ceci représentant une seconde condition pour une détection de saturation, une détection de saturation encore non confirmée, et régler ladite valeur de sortie sur $b_6 = 1$ si la condition est satisfaite ;
- un temporisateur (27) pour recevoir la valeur $b_6$ en tant qu'entrée et maintenir l'entrée $b_6$ pendant un temps $T_d$, où $T_d = mT_s$, ladite valeur $m$ et ledit temps d'échantillonnage $T_s$ dépendant d'une fréquence de modulation du courant primaire, pour obtenir une sortie dudit temporisateur (27) en tant que valeur $b_7$ ;
- un inverseur (28) pour recevoir la valeur $b_7$ en tant qu'entrée et pour inverser la valeur d'entrée $b_7$ pour obtenir une valeur $b_8$ au niveau de la sortie dudit inverseur ;
- un élément de sortie (29) se réglant lui-même sur une valeur $b_9 = 1$, si dans le même temps $b_6 = 1$ et $b_8 = 1$, sinon se réglant lui-même sur la valeur $b_9 = 0$ ; ladite valeur $b_9 = 1$ signifiant détection de saturation confirmée.

6. Dispositif selon la revendication 5, ladite première valeur d'entrée étant choisie dans le groupe contenant : une valeur instantanée de courant primaire, une valeur discrète dans le temps de courant primaire, une valeur instantanée de tension de sortie de ladite bobine de Rogowski, une valeur discrète dans le temps de tension de sortie de ladite bobine de Rogowski.

7. Dispositif selon la revendication 5, ladite seconde valeur d'entrée étant choisie dans le groupe contenant : $|i_1(k - 1)| + \Delta i_1$, $u_{Rlimit}$, $di_{1limit}(t)/dt$, où $|i_1(k-1)|$ représente une valeur absolue dudit courant primaire maintenu pendant un intervalle d'échantillonnage et $\Delta i_1$ représente une valeur marginale ajoutée de courant choisie en fonction des propriétés souhaitées de la détection de saturation ; $u_{Rlimit}$ représente une valeur limitante d'une tension analogue provenant de ladite bobine de Rogowski ; $di_{1limit}(t)/dt$ représente une valeur limitante de la pente du courant primaire.

8. Dispositif selon les revendications 5 à 7 comprenant une partie entrée discrète (10) comprenant un convertisseur A/N (11), un élément ABS (12) pour déterminer la valeur absolue du courant primaire, un élément (14) pour fournir une valeur de référence préétablie de courant $\Delta i_1$, un élément de maintien (15) pour retarder la valeur absolue du courant primaire d'un intervalle d'échantillonnage et délivrer ladite valeur absolue maintenue du courant $|i_1(k-1)|$ au niveau de sa sortie, un autre additionneur (13) pour la sommation dudit courant de référence préétabli $\Delta i_1$ et de la sortie $|i_1(k - 1)|$ de l'élément de maintien (15), ledit premier comparateur (21) comparant entre les sorties dudit élément ABS (12) et dudit autre additionneur (13).

9. Dispositif selon les revendications 5 à 7 comprenant une partie entrée discrète dans le temps (30) comprenant un convertisseur A/N (31), un élément ABS (32) pour déterminer la valeur absolue de la tension de la bobine de Rogowski, un élément (33) pour fournir une valeur de référence préétablie de la pente limitante du courant primaire sous la forme d'une tension correspondante de la bobine de Rogowski $u_{Rlimit}$, ledit premier comparateur (21) comparant entre les sorties desdits éléments ABS (32) et dudit élément (33) pour fournir ladite valeur de référence préétablie de la pente limitante du courant primaire.

10. Dispositif selon les revendications 5 à 7 comprenant une partie entrée continue dans le temps (40) comprenant un élément ABS (41) pour la détermination de la valeur absolue de la tension provenant de la bobine de Rogowski, un élément (42) pour fournir une valeur de référence préétablie de la pente limitante du courant primaire sous la forme de la tension correspondante de la bobine de Rogowski, ledit premier comparateur (21) comparant entre les sorties desdits éléments ABS (41) et dudit élément (42) pour fournir ladite valeur de référence préétablie de la pente limitante du courant primaire.

11. Dispositif selon les revendications 5 à 7 comprenant une partie entrée continue dans le temps (50) comprenant un élément ABS (51) pour la détermination de la valeur absolue du courant primaire, un élément (53) pour la détermination analogue et la sortie de la dérivée temporelle du courant primaire $di_1(t)/dt$, un élément (52) pour fournir une valeur de référence préétablie de la pente du courant primaire $di_{1limit}(t)/dt$, ledit premier comparateur (21) comparant entre ladite dérivée temporelle du courant primaire et ladite valeur de référence préétablie de la pente du courant primaire.

12. Dispositif selon l'une quelconque des revendications 5 à 11, ledit dispositif comprenant un processeur configuré pour être utilisé pour commander le système de soudage par points à résistance.

13. Dispositif selon l'une quelconque des revendications 5 à 11, ledit dispositif comprenant un processeur autonome, qui est fourni séparément d'un processeur configuré pour être utilisé pour commander le système pour le soudage par points à résistance.

Fig.1.

Fig.2.

Fig.3.

Fig.4.

Fig.5.

**EP 3 079 162 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2097912 B1
- DE 102014209619 A1
- DE 354705
- US 5942134 A
- DE 4134461 A1
- DE 19621526 C1
- US 4973815 A
- JP S6422477 A